# EUROPÄISCHE PATENTANMELDUNG

(11) **EP 0 967 572 A2**
(43) Veröffentlichungstag der Anmeldung: **29.12.1999**
(21) Anmeldenummer: 99890201.9
(22) Anmeldetag: 21.06.1999
(51) Int. Cl.: G06T 3/00, H04N 5/262, G03B 41/00

(54) **Verfahren zur Transformation von Filmaufnahmen**

(30) Priorität: 22.06.1998 AT 107498
(71) Anmelder: Reinhart, Martin, 1060 Wien (AT)
(72) Erfinder: Reinhart, Martin, 1060 Wien (AT)
(74) Vertreter: Patentanwälte BARGER, PISO & PARTNER

(57) **Zusammenfassung**

Die Erfindung betrifft ein Verfahren zur Transformation von aus einzelnen Originalkadern bestehenden Filmen.

Sie ist dadurch gekennzeichnet, daß ein aus einer Reihe von Originalkadern gebildeter Bildkörper nach einer Abfolge von Flächen geschnitten wird, die die transformierten Kader bildet.

## Beschreibung

Die Erfindung betrifft ein Verfahren zur Transformation von Filmaufnahmen.

Unter Filmaufnahmen werden in diesem Text sowohl übliche Kinofilme, die aus einzelnen physischen Kadern bestehen, als auch analoge oder digitale Aufzeichnungen, die über einen Monitor oder ein Fernsehgerät zu betrachten sind, und bei denen die Kader in optisch nicht erkannbarer Form, beispielsweise auf einem Magnetträger oder einer CD in derem Format vorliegen, verstanden.

Diese Filmaufnahmen haben es gemeinsam, daß jeder einzelne Kader einen kurzen Moment der Zeit, üblicherweise im Abstand von einer vierundzwanzigstel oder fünfundzwanzigstel Sekunde, aber gleichzeitig den gesamten gefilmten Raum abbildet. Die einzelnen Kader werden in einem Abstand, der dem Aufnahmeabstand im allgemeinen entspricht (wenn von Zeitlupe oder Zeitraffer abgesehen wird) sichtbar gemacht, wodurch beim Betrachter der gewohnte Bewegungseffekt auftritt.

Es soll hier und im folgenden nicht auf Abbildungs- und Wiedergabedetails, beispielsweise des Fernsehens, eingegangen werden, bei dem jeder einzelne Kader zweimal, einmal die geraden, einmal die ungeraden Zeilen durchfahren wird, um zu einem weniger flimmernden Bild kommen.

Die Grundidee der Erfindung ist es, das oben geschilderte Prinzip, wonach jeder Kader eine Momentaufnahme der Zeit, aber eine Gesamtaufnahme des gefilmten Raumes darstellt, so zu tranformieren, daß man Bilder erhält, die eine Gesamtaufnahme der Zeit an einem vergleichsweise winzigen Ort darstellen. Es kann sich sodann natürlich dieser Ort von transformiertem Kader zu transformiertem Kader schrittweise ändern, wie sich auch im Originalfim die Zeit von Originalkader zu Originalkader schrittweise ändert, wodurch man eine "allzeitige" Reise durch den Raum erfährt.

Ein Modell zum leichteren Verständnis der Transformation besteht darin, sich die einzelnen Originalkader ähnlich den Dias in einem Aufbewahrungsbehälter dicht an dicht aneinandergedrängt und zueinander fluchtend vorzustellen, sodaß sie einen Bildkörper bilden. Wenn man diesen Bildkörper entlang der Originalkader schneidet und Schnitt für Schnitt nacheinander betrachtet, erhält man den Original film. Wenn man diesen Bildkörper in einer anderen Richtung, beispielsweise orthogonal zu den Originalkadern, aber in vertikaler Ebene schneidet und mit immer parallelen Schnitten fortschreitet und jeweils solche transformierten Kader einen nach dem anderen betrachtet, so erhält man das Bild eines eng begrenzten Ortes, wobei an dessen einem Rand die frühesten und am anderen Rand die spätesten Verhältnisse dargestellt sind. Beim fortschreitenden Betrachten erhält man, wobei Rand für Rand die Zeit konstant bleibt, eine Wanderung des jeweils betrachteten Ortes über den gefilmten Raum, sogenannte "Raumschnittabfolgen".

Es sind selbstverständlich auch schräge oder gebogene Schnitte denkbar, wodurch die erstaunlichsten Effekte zu erzielen sind, insbesondere wenn die Originalkader mit bewegter Kamera und/oder veränderlichem Bildausschnitt aufgenommen wurden.

Auf eng begrenzten technischen Gebieten ist die Aufnahme kleiner Flächen über die Zeit und eine entsprechende zeitversetzte Darstellung bekannt:

Es wird dabei auf die elektronischen Zielkameras bei Pferderennen verwiesen, die mit einer einreihigen CCD-Kamera ein Bild entlang der Ziellinie abbilden, das genau einen Pixel breit ist. Mit der Abbildungsfrequenz derartiger Vorrichtungen werden immer neue, jeweils ein Pixel breite Streifen des immer selben Bildausschnittes abgebildet, die einander jedoch nicht ersetzen, sondern auf einem Medium mit jeweils einem Pixel Abstand voneinander fixiert werden. Jedes zur Ziellinie gelangende Pferd wird hier Pixelstreifen für Pixelstreifen beim Überqueren der Ziellinie abgebildet und es ist das erhaltene Bild, obwohl es aussieht, wie ein normales Pferd, das in einem "fotografiert" wurde, ein zusammengesetztes Bild aus einer zeitlichen Abfolge schmaler Streifen immer desselben Raumes.

Zur Abbildung von mesopotamischen Rundsigeln wurde die Möglichkeit geschaffen, den Filmtransport hinter einer Kamera mit feststehendem Schlitz bzw. die Schlitzblende einer Kamera bei feststehendem Film mit der Winkelgeschwindigkeit eines Drehtellers für das Rundsigel so zu koordinieren, daß ein ebenes Bild des Sigels erhalten wurde, das völlig verzerrungsfrei war.

Ähnliche Vorrichtungen wurden zur Abbildung extrem langer Malereien und Handschriften, beispielsweise auch für die Skulpturenfriese der südostasiatischen Tempel geschaffen.

All die dabei erhaltenen Aufnahmen sehen aus wie verzerrungsfreie Fotos, wurden aber durch Nebeneinanderstellen zeitlich unterschiedlicher Aufnahmen aus jeweils anderer Lage gewonnen.

All diese vorbekannten Verfahren und Vorrichtungen erlauben es nicht, aus üblichem Filmmaterial zeitliche Übersichten konstant bleibender Orte herzustellen.

Es gibt natürlich auch Verfahren zur Bearbeitung von Originalkadern von Filmaufnahmen bzw. von Einzelaufnahmen:

Die EP 658 870 A2 betrifft eine Anzeigevorrichtung, bei der die verschiedenen anzuzeigenden Frames zur Beschleunigung des Wechsels in der Anzeige in Sub-Frames unterteilt werden. Dadurch wird es bei der vorbekannten Anzeigevorrichtung ermöglicht, nur diejenigen Erfassungsmittel (scanning electrodes) zu aktivieren, die bei der Änderung eines Teiles der Anzeige dem jeweils zu ändernden Sub-Frame entsprechen.

Es ist bei der vorbekannten Vorrichtung nicht daran gedacht und wäre bei deren Verwendungszweck auch widersinnig, Teile von bereits der Vergangenheit angehörenden Frames zu speichern und anzuzeigen. Die in dieser Druckschrift angesprochenen Sub-Frames betreffen in sich geschlossene Abschnitte, die unabhängig von anderen Abschnitten aktualisiert werden können, so daß eine Gesamtanzeige aus einer unterschiedlichen Anzahl von Teilanzeigen entsteht. Dieses Verfahren wird insbesondere dazu verwendet, bei Videoaufnahmen einzelne Teile des aufgenommenen Bildes, die unterschiedlich hell sind, nach unterschiedlich langer Belichtungszeit anzuzeigen bzw. zu speichern, um auch bei starken Helligkeitskontrasten möglichst das ganze Bild erkennbar zu machen.

Die EP 792 060 Al betrifft eine Verbesserung der digitalen Erfassung von Röntgenbildern od.dgl. Es wurde festgestellt, daß diese Erfassung aufgrund einer verfahrensbedingten Gitterstruktur beim Einlesen der Filme (digitale Erfassung) problematisch ist. Durch die Anwendung theoretischer Überlegungen zur Streuung der Röntgenstrahlen und entsprechende Rückrechnung der erhaltenen Bilder, die natürlich diese gestreuten Anteile ebenfalls umfassen, wird eine verbesserte Darstellung und Erfassung ermöglicht. Es wird somit bei dieser vorbekannten Vorrichtung bzw. dem vorbekannten Verfahren ein einziges Bild dadurch in seiner Qualität verbessert, daß die der Aufnahmetechnik des Bildes inhärenten Probleme (Rasterung) eliminiert werden. Eine Änderung dieses Verfahrens, wonach aus einer Vielzahl von Bildern, eine Vielzahl anderer Bilder mit Bild für Bild anderer Information geschaffen werden, ist durch diese Druckschrift nicht vorweggenommen oder auch nahegelegt.

Die US 5 187 439 A beschäftigt sich mit dem Problem, bei der Kernspintomographie bei einem Scannvorgang die körpereigenen Fett- und Wasseranteile einer Schichte zwar gleichzeitig zu erfassen, aber getrennt darzustellen. Dieses Problem wird durch Änderungen des Kernspintomographen und durch spezielle Bildinterpretierende Maßnahmen gelöst. Diese sehr komplexe Lösung des speziellen Problems der Unterscheidung von Fettanteil und Wasseranteil hat mit der vorliegenden Erfindung nichts zu tun. Es werden insbesondere keine zeitlich aufeinanderfolgenden Bilder in Einzelbereiche zerlegt und die so erhaltenen Einzelbereiche wieder zu Gesamtbildern vereint. Das dem Vorhalt zugrundeliegende Verfahren besteht darin, für eine Schichte einer kernspintomographischen Aufnahme doppelt so viele Einzelbilder herzustellen, wie es ohne die Erkennung und Trennung der Fett- bzw. Wasseranteile bis dahin üblich war und dabei das angelegte Magnetfeld auf eine neue Art zu pulsen bzw. die einzelnen Bilder in speziellen Abständen zu den Impulsen zu gewinnen und sodann mittels zweidimensionaler Fouriertransformation aus den vorliegenden Einzelbildern die Unterscheidung zwischen Fett und Wasser zu treffen. Es ist somit dieses Verfahren aufgrund der Besonderheiten der Kernspintomographie geeignet, durch das unterschiedliche Verhalten von Wasser und Fett nach dem Abschalten des Magnetfeldes, diese beiden Materialien zu unterscheiden, wenn man bestimmte Parameter einhält und eine Verdoppelung der Anzahl der Einzelbilder in Kauf nimmt, um durch das unterschiedliche Verhalten auf dieser größeren Anzahl von Bildern die Unterscheidung treffen zu können.

Die EP 134 719 A2 betrifft eine Etikettendruckmaschine, die es erlaubt, Etiketten zu drucken, bei denen einzelne Elemente konstant bleiben, andere Elemente sich aber ändern. Letzteres können beispielsweise Seriennummern, Chargennummern oder unterschiedliche Abkürzungen für den Inhalt des etikettierten Gegenstandes sein. Es entspricht somit diese Vorrichtung, wenn auch zu völlig anderer Verwendung und mit fix vorgegebenen Bildbestandteilen, wesentlich mehr der erstgenannten EP 658 870 A2 als der Erfindung.

Erfindungsgemäß transformierte Darstellungen sind einerseits in der Kunst einsetzbar, insbesondere bei Musikvideos, da sie ganz neue Einblicke in menschliche oder tierische Bewegungen und Handlungsabläufe erlauben, anderseits in der Werbung, aber sie sind auch zur Überwachung von räumlich eng begrenzten Gebieten oder Maschinenteilen od.dgl. einsetzbar und auch, um Verweilfrequenzen, beispielsweise vor Regalen von Supermärkten, vor einzelnen Reklamen oder Waren, auf leichte und einfache Weise erheben zu können. Schließlich sei auch auf die Möglichkeit hingewiesen, auf dem Gebiete der Verhaltensforschung und der Soziologie die Interaktion von Individuen auf diese Weise anschaulicher als bisher üblich darstellen und auswerten können.

Das erfindungsgemäße Verfahren besteht somit, prinzipiell gesprochen, darin, aus einer Reihe von Originalkadern, die einen Bildkörper bilden, die Schnittform, die Richtung und die Abfolge von Schnitten festzulegen, entlang denen die transformierten Kader gebildet werden. Die Durchführung dieses Verfahrens kann beispielsweise bei digitalisierten Orginalkadern durch einfache Transformationen erfolgen, soferne die transformierten Kader durch ebene Schnittflächen geschaffen werden. Bei der Verwendung gekrümmter Schnittflächen steigt die Komplexität der Transformation, ohne deshalb prinzipiell schwieriger zu werden.

Aus dem Gesagten geht hervor, daß beispielsweise die Bildbreite der transformierten Kader mit zunehmender Zeitdauer des Bildkörpers zunimmt. Da nun die transformierten Kader im allgemeinen wiederum im Standardformat betrachtet werden müssen, da andere Formate in ökonomisch vertretbarer Weise nicht zur Verfügung stehen, wird der Zeitgradient über den transformierten Kader immer steiler. Andererseits werden sehr kurze Sequenzen durch die Abbildung in einem vorgegebenen Standardformat streifig oder überhaupt unkenntlich. Bei Verwendung normaler Abbildungen, wie sie vom Fernsehen bekannt sind und einer Frequenz der Originalkader von 24/sek ist es günstig, die zeitliche Länge des Bildkörpers mit minimal 30 sek anzusetzen, um die erwähnten Störungen zu vermeiden.

Die Erfindung wird an Hand der Zeichnung näher erläutert. Dabei zeigt
die Fig. 1 einen aus einer Reihe von Original-Kadern bestehender Bildkörper und
die Fig. 2 rein schematisch das erfindungsgemäße Verfahren.

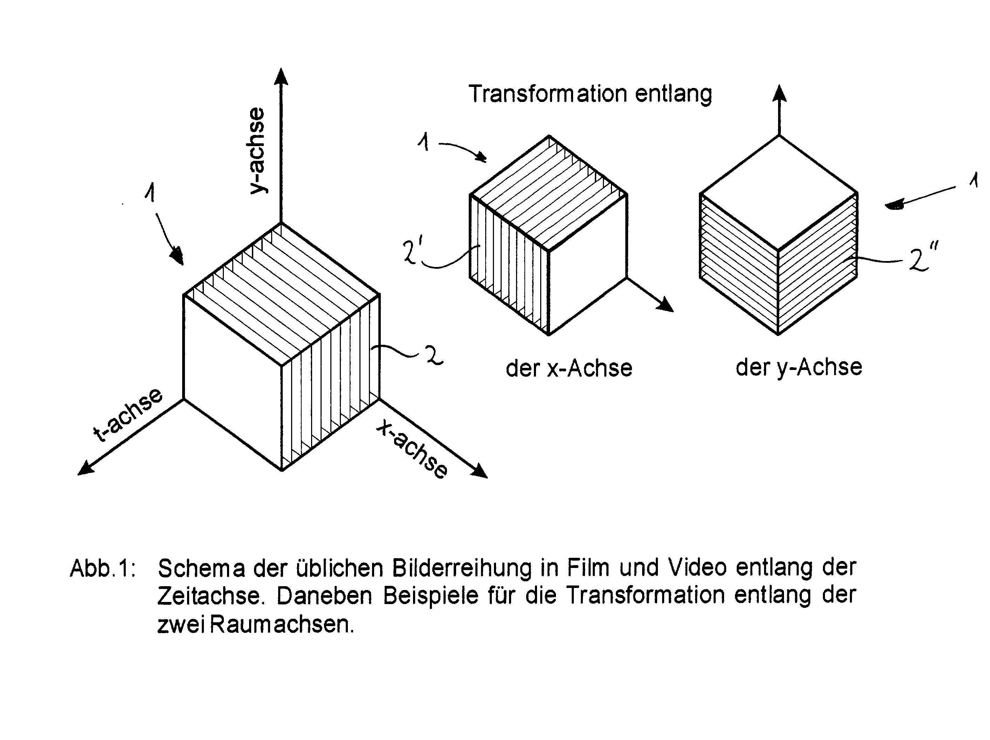

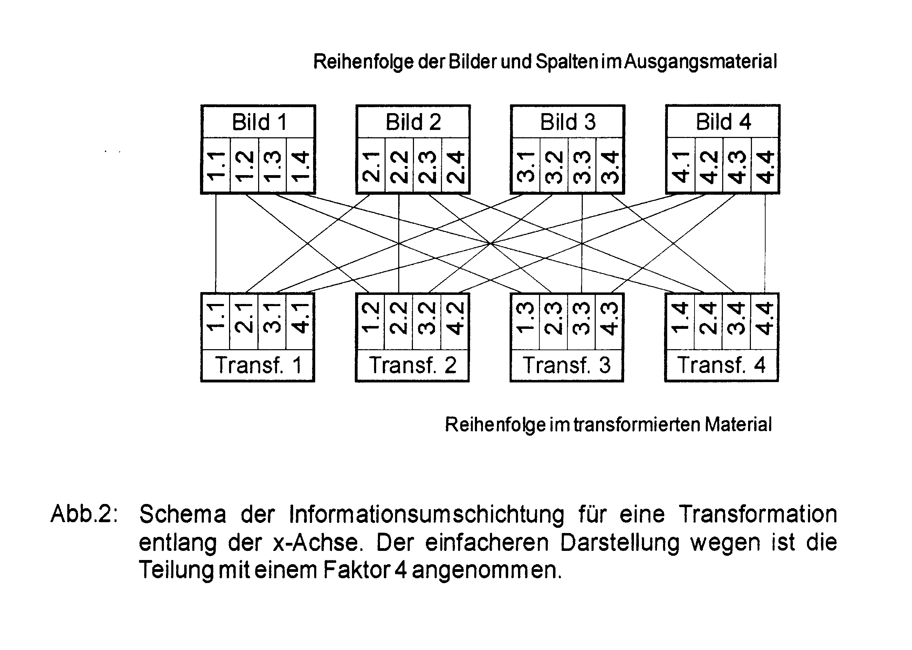

Fig. 1 zeigt einen Bildkörper, bei dem schematisch in perspektivischer Ansicht die einzelnen Original-Kader der fortschreitenden Zeit entsprechen. Bei einer üblichen Filmdarstellung sieht man nun einen dieser Kader nach dem anderen, Schritt für Schritt, wodurch sich der typische Filmeindruck ergibt.

In Fig. 1 wurde nun dieser aus den einzelnen Kadern 2 zusammengesetzte Bildkörper 1 auch entlang einer Ebene geschnitten, die parallel zur Zeitachse t und vertikal verläuft, wodurch sich eine erste Reihe transformierter Kader 2' ergibt.

Die dritte Darstellung in Fig. 1 zeigt eine andere Möglichkeit der Transformation, bei der man transormierte Kader 2" erhält.

Die Fig. 2 stellt das erfindungsgemäße Transformationsprinzip schematisch an Hand einer ganz einfachen, nur vier Ausgangsbilder B1,B2,B3,B4 umfassenden Filmsequenz dar. Da hier ein Film, bestehend aus vier Originalkadern B1 bis B4 in vier transformierte Kader T1 bis T4 zu transformieren ist, wird jeder der Ausgangskader in vier Streifen geteilt. Im nächsten Schritt wird der transformierte Kader T1 aus den Streifen 1.1, 2.1, 3.1 und 4.1 gebildet, auf gleiche Weise der transformierte Kader T2 aus den Streifen 1.2, 2.2, 3.2 und 4.2 u.s.w.

Es ist klar ersichtlich, daß bei Vorliegen von nur vier Originalkadern die erhaltenen transformierten Kader entlang der Stoßkanten der einzelnen Streifen keine glatten Übergänge aufweisen werden und auch, daß diese Unstetigkeiten und Ecken mit der Anzahl der Originalkader und damit mit der Anzahl der Streifen, aus denen jeder transformierte Kader aufgebaut ist, geglättet werden.

Aus Fig. 2 ist für das schematische Ausführungsbeispiel mit nur vier Originalkadern die Zusammensetzung der transformierten Kader auch graphisch dargestellt.

Zurückkommend auf Fig. 1 kann der Aufbau des transformierten Filmes als Abfolge von Schnitten analog zur Abfolge der Originalkader verstanden werden.

Es ist aus Fig. 1 auch leicht ersichtlich, wie im Falle gekrümmter Raumschnitte die transformierten Filme zu erhalten wären, wobei es in diesem Fall nicht möglich wäre, den gesamten im Originalfilm abgebildeten Raumkörper zu transformieren, da es Bereiche gibt, in denen die gekrümmte Schnittfläche schon aus dem Raumkörper tritt, während sie in anderen Bereichen noch in ihm verläuft.

Es ist ebenfalls aus der Fig. 1 ersichtlich, daß es nicht notwendig ist, daß die Raumschnitte vertikal oder im wesentlichen vertikal verlaufen, sondern daß auch schräg oder, wie dargestellt, "horizontal" liegende Schnitte möglich sind. Derartige Schnitte könnten insbesondere in der Biologie zur Darstellung des Bewuchses von Flächen u.ä. nützlich sein.

Die praktische Durchführung des Verfahrens ist bei vorliegen der Originalkader in einem genormten und dokumentierten elektronischen Format nicht weiters schwierig, insbesondere dann nicht, wenn es sich um ein digitales Format handelt. Es sind in diesem Fall dann nur die dreidimensionalen Matrizen, die die Originalkader beim Aufbau des Bildkörpers bilden, zu transformieren, wozu genügend mathematische Hilfsmittel als Software zur Verfügung stehen.

Auch ohne solche Transformation dreidimensionaler Matrizen ist durch schrittweises Kopieren immer der entsprechenden Pixelspalten der Originalkader auf einen transformierten Kader eine Transformation leicht möglich, wobei bei diesem Vorgehen die benötigten Speicherkapazitäten sogar wesentlich geringer sind als im ersten Fall.

Nicht digitalisierte Formate können entweder digitalisiert werden oder es müssen die analog im Zuge des Durchlaufens einer Zeile auftretenden Werte in entsprechender zeitlicher Abfolge den einzelnen transformierten Kader übermittelt werden.

Es ist für die praktische Durchführung günstig, wenn die Breite des jedem Originalkaders entnommenen Streifens (ob in Pixel oder einer anderen Einheit gemessen, ist egal, nur muß diese Einheit durchgehend verwendet werden) mit der Anzahl der verwendeten Originalkader und der Breite des entsprechenden transformierten Kaders in einem solchen Verhältnis steht, daß "Abschnitzel" vermieden werden, wenn dies auch keine unabdingbare Forderung ist.

Als Beispiel für ein erfindungsgemäß verwendbares Transformationsprogramm wird ein entsprechendes Listing angeführt.

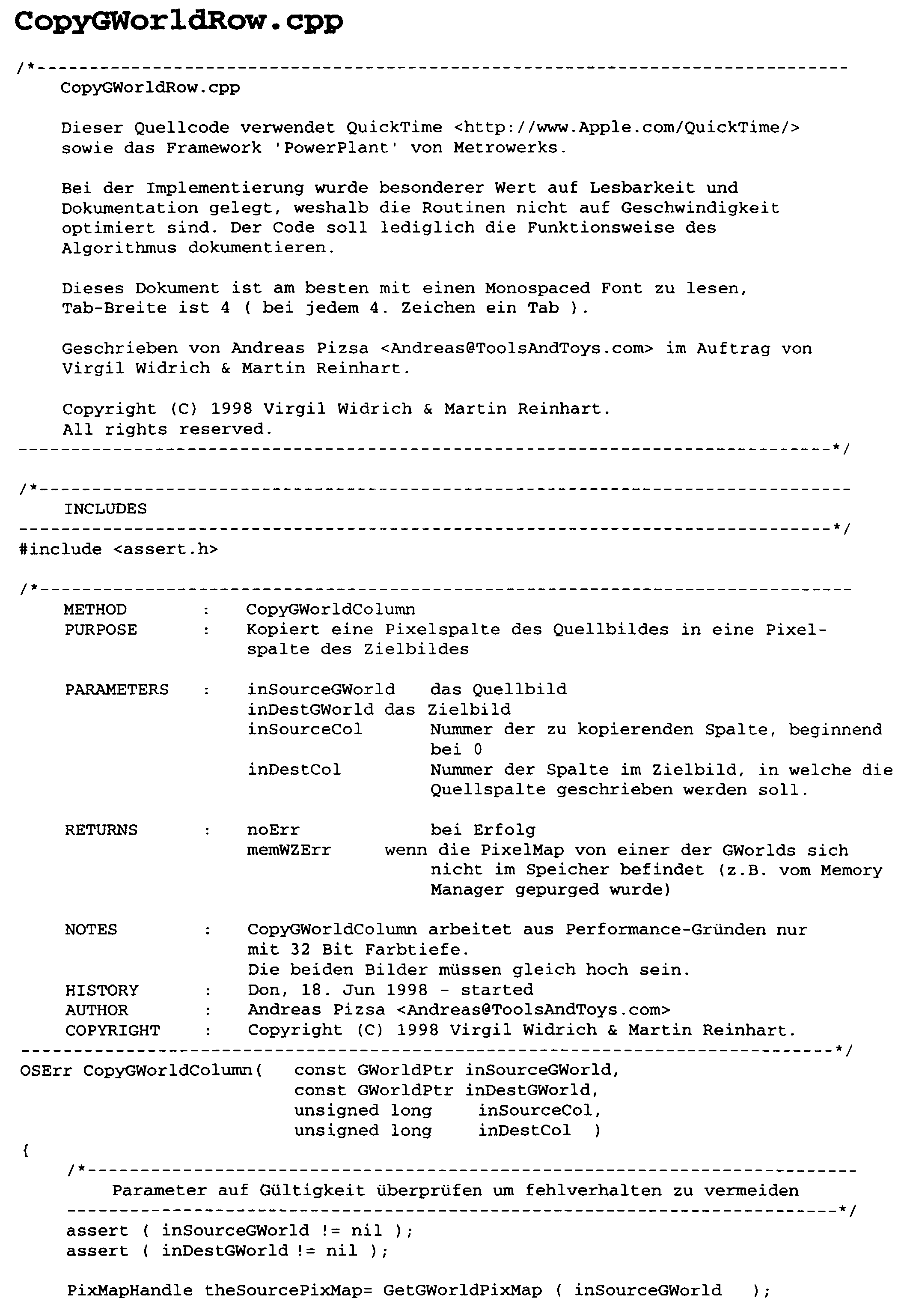

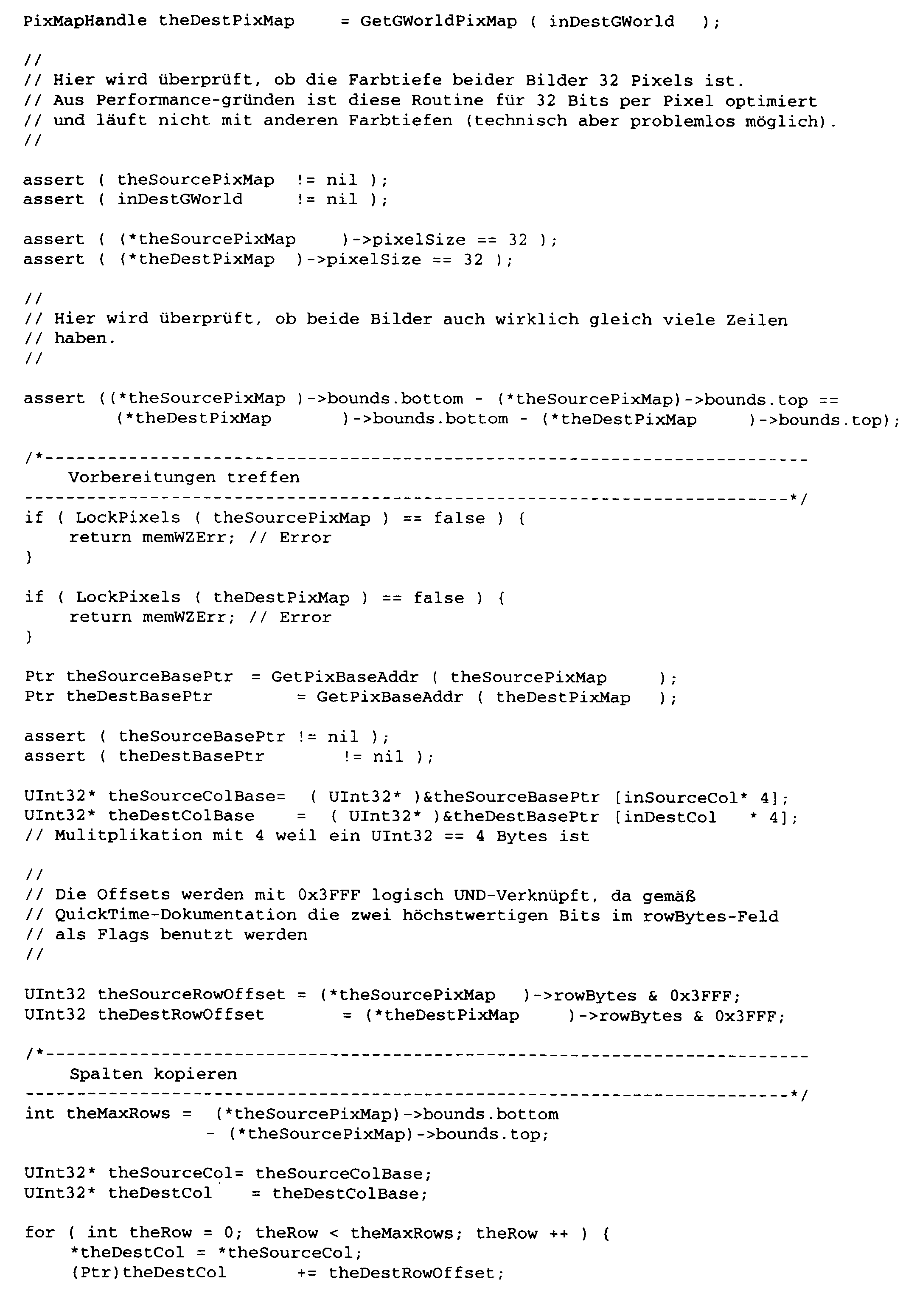

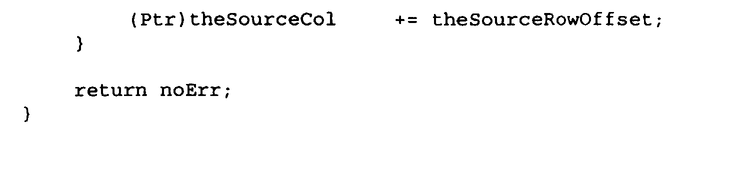

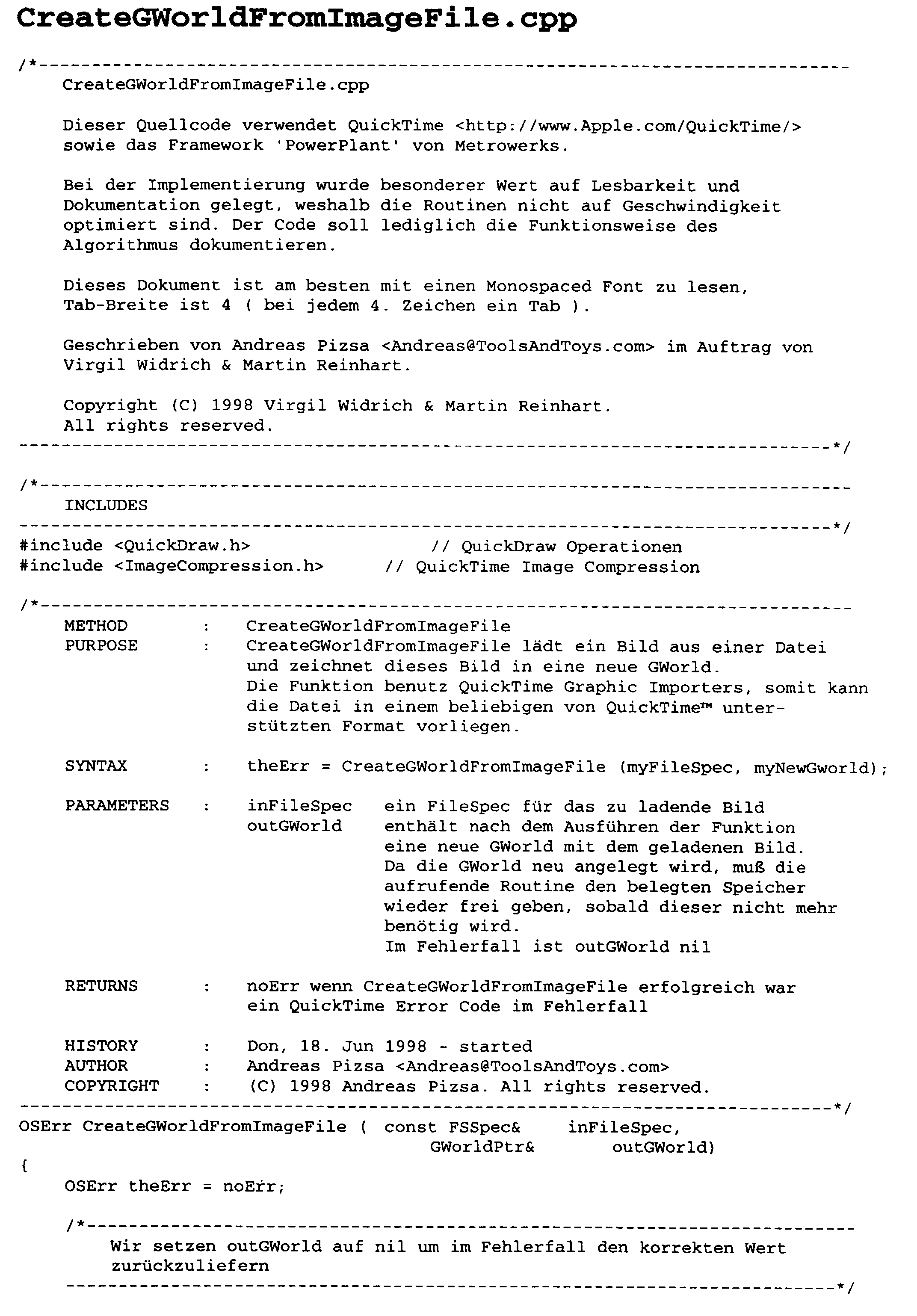

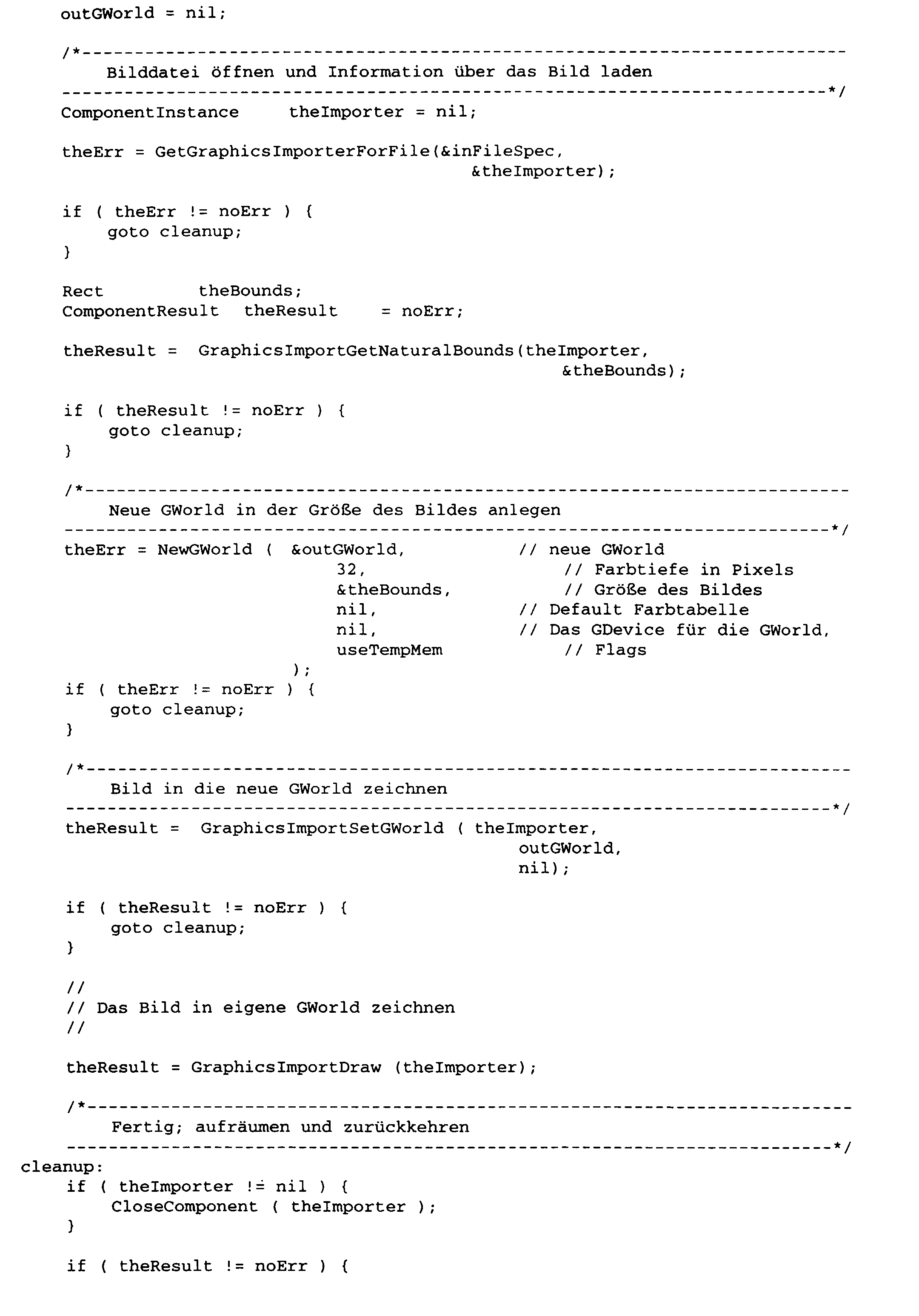

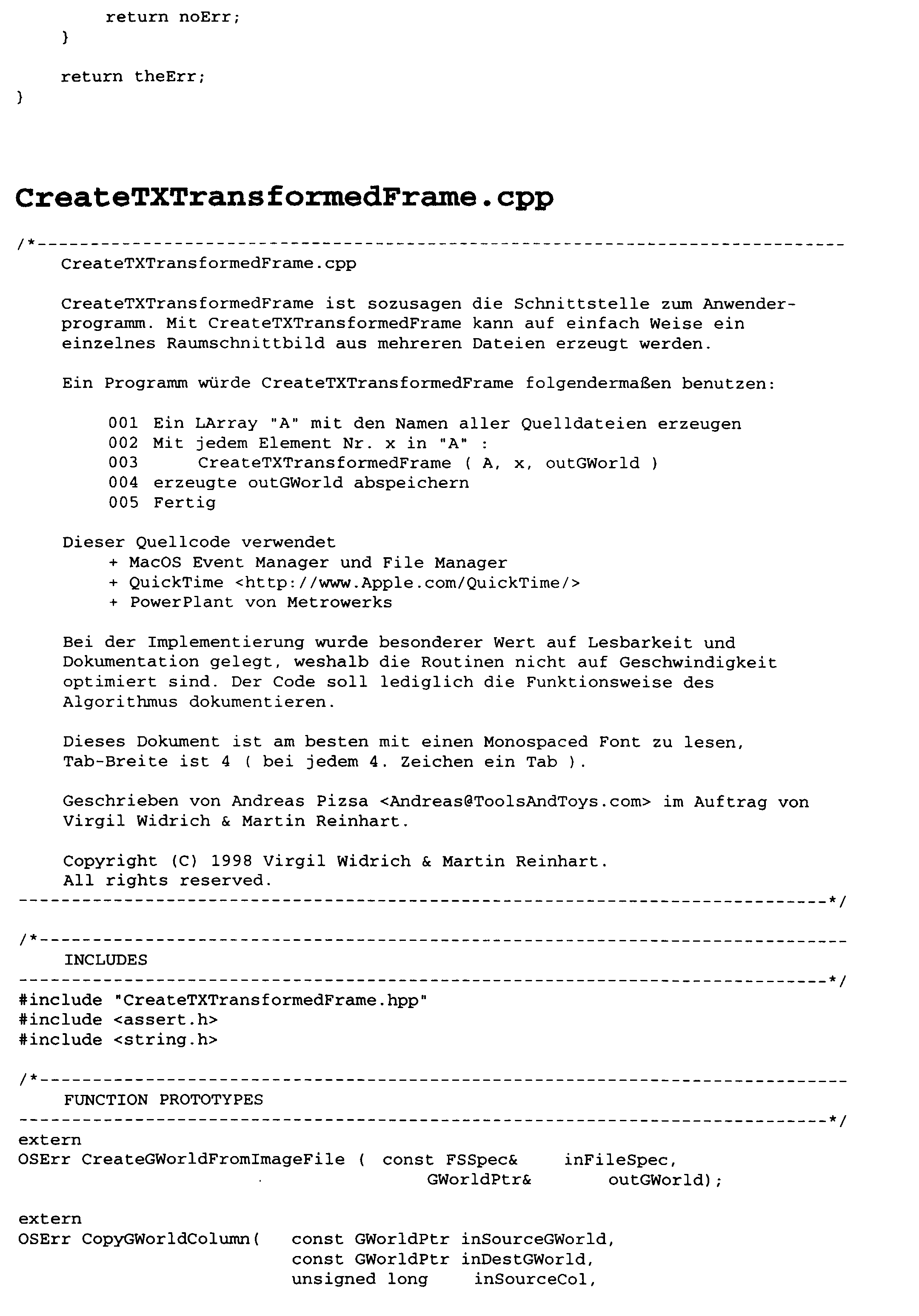

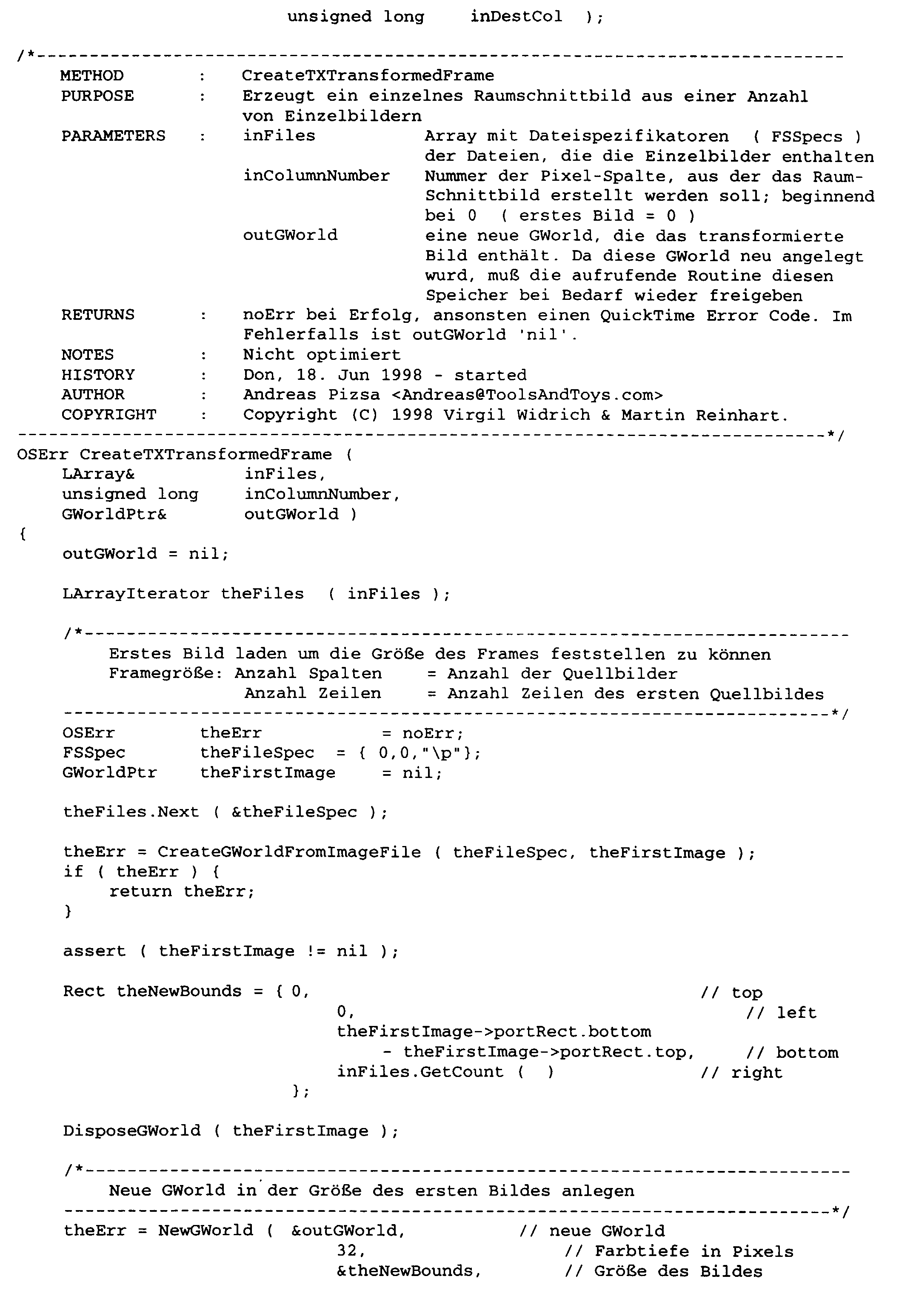

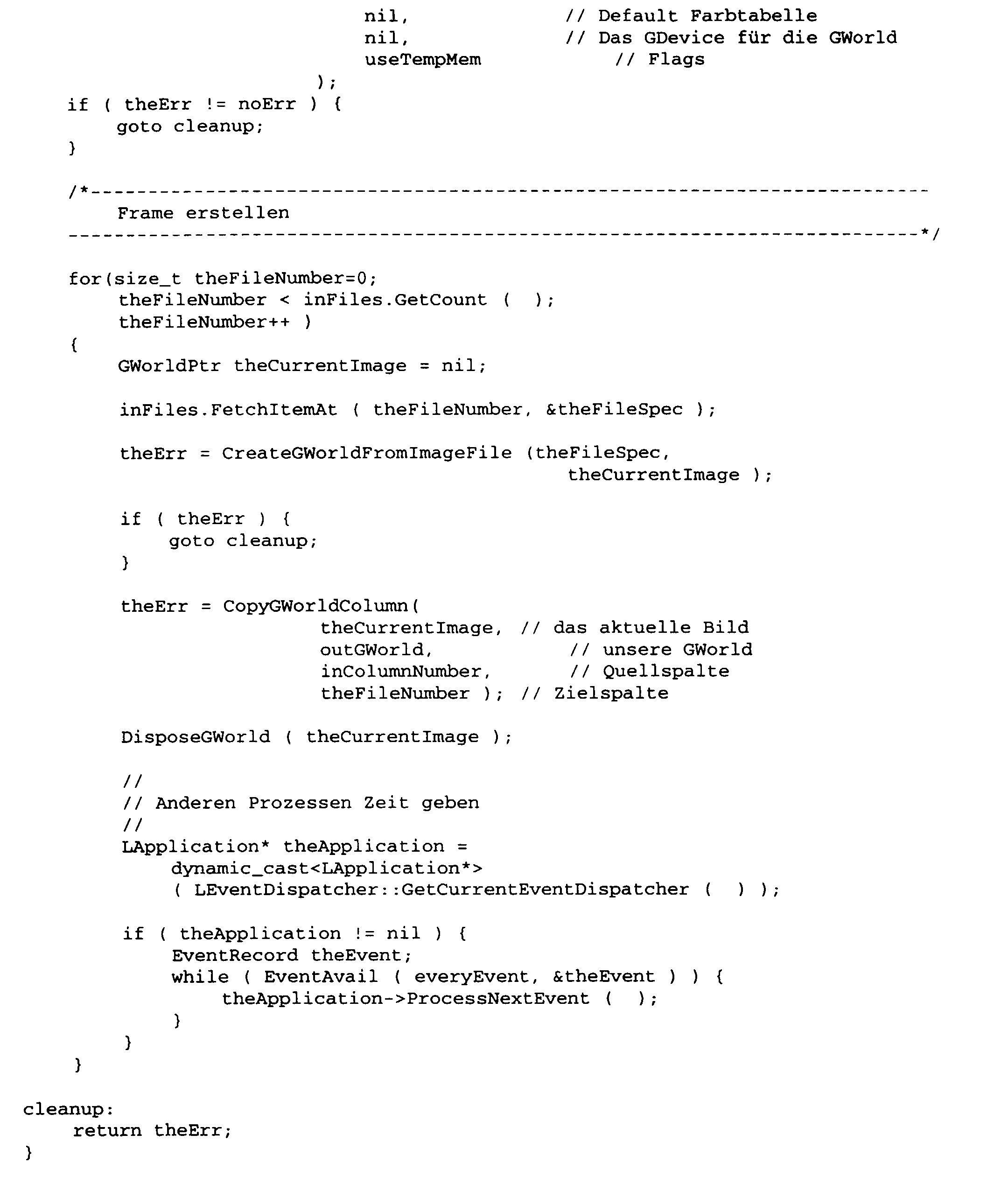

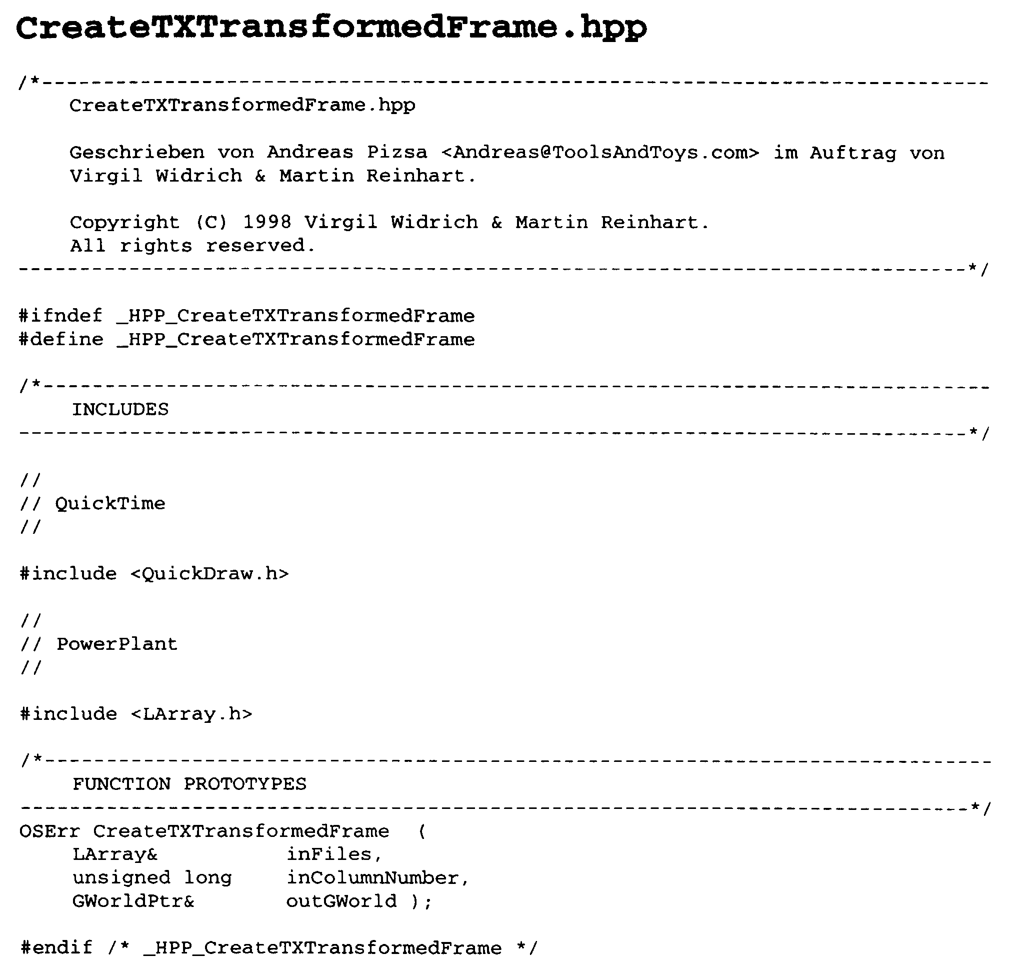

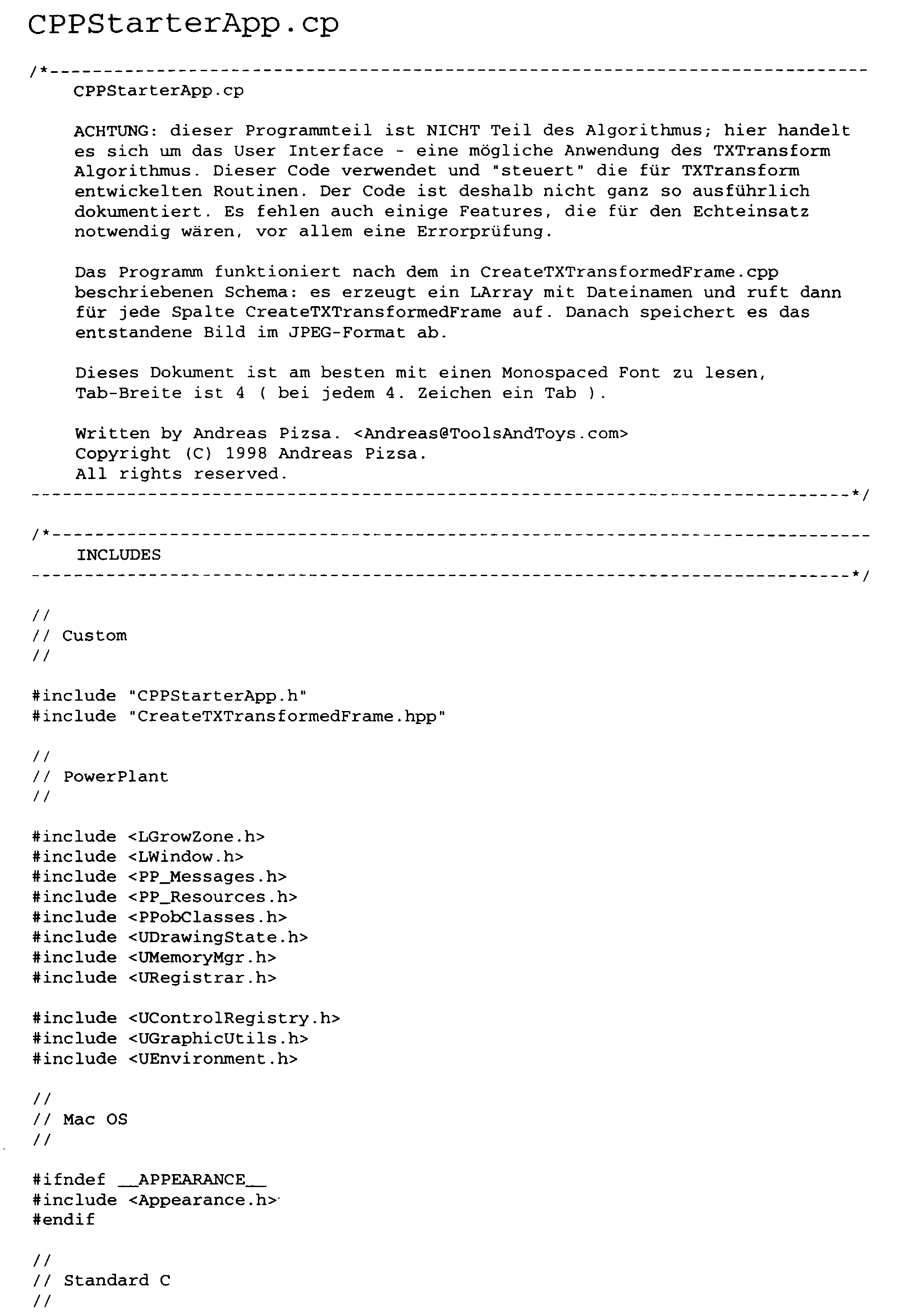

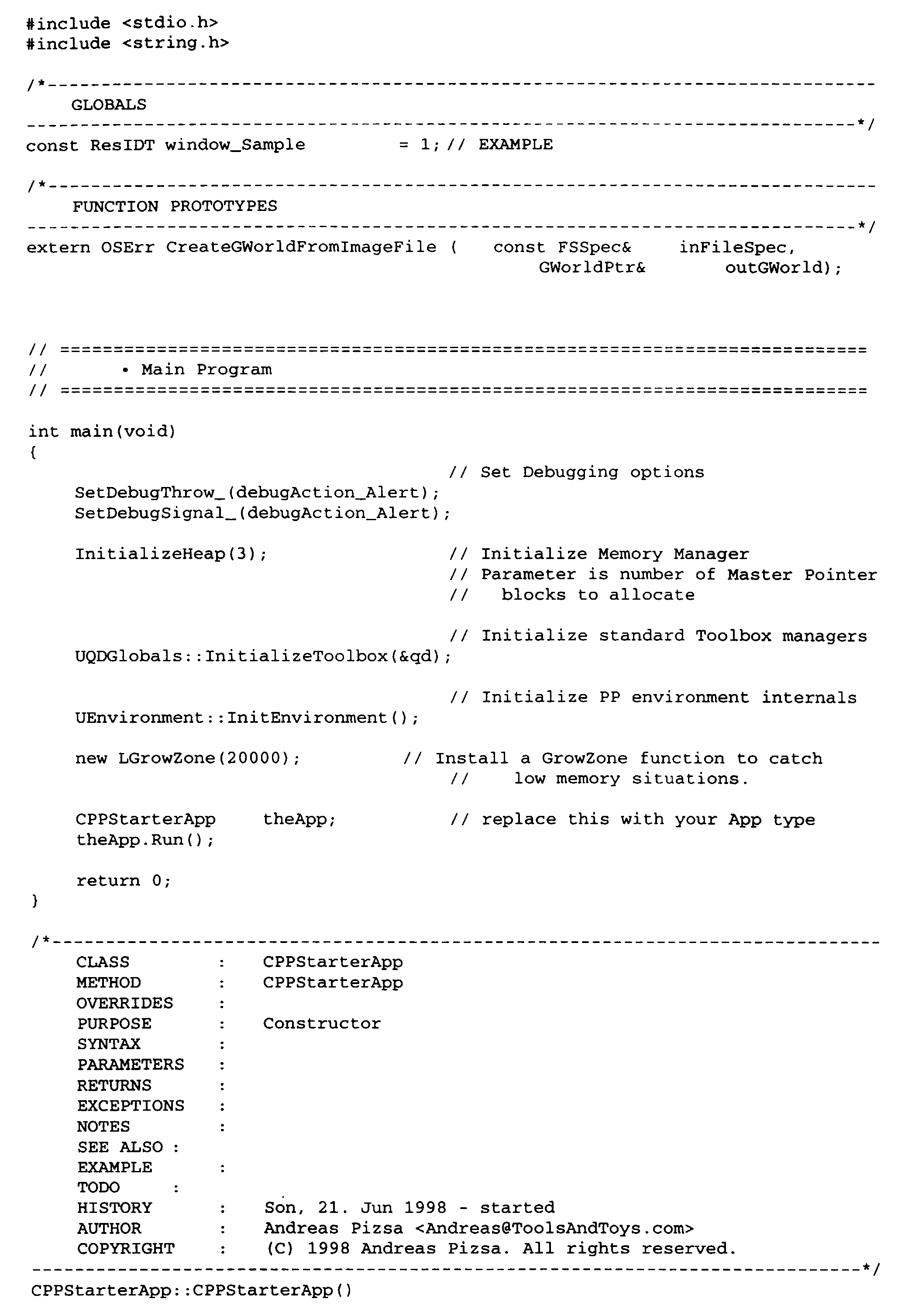

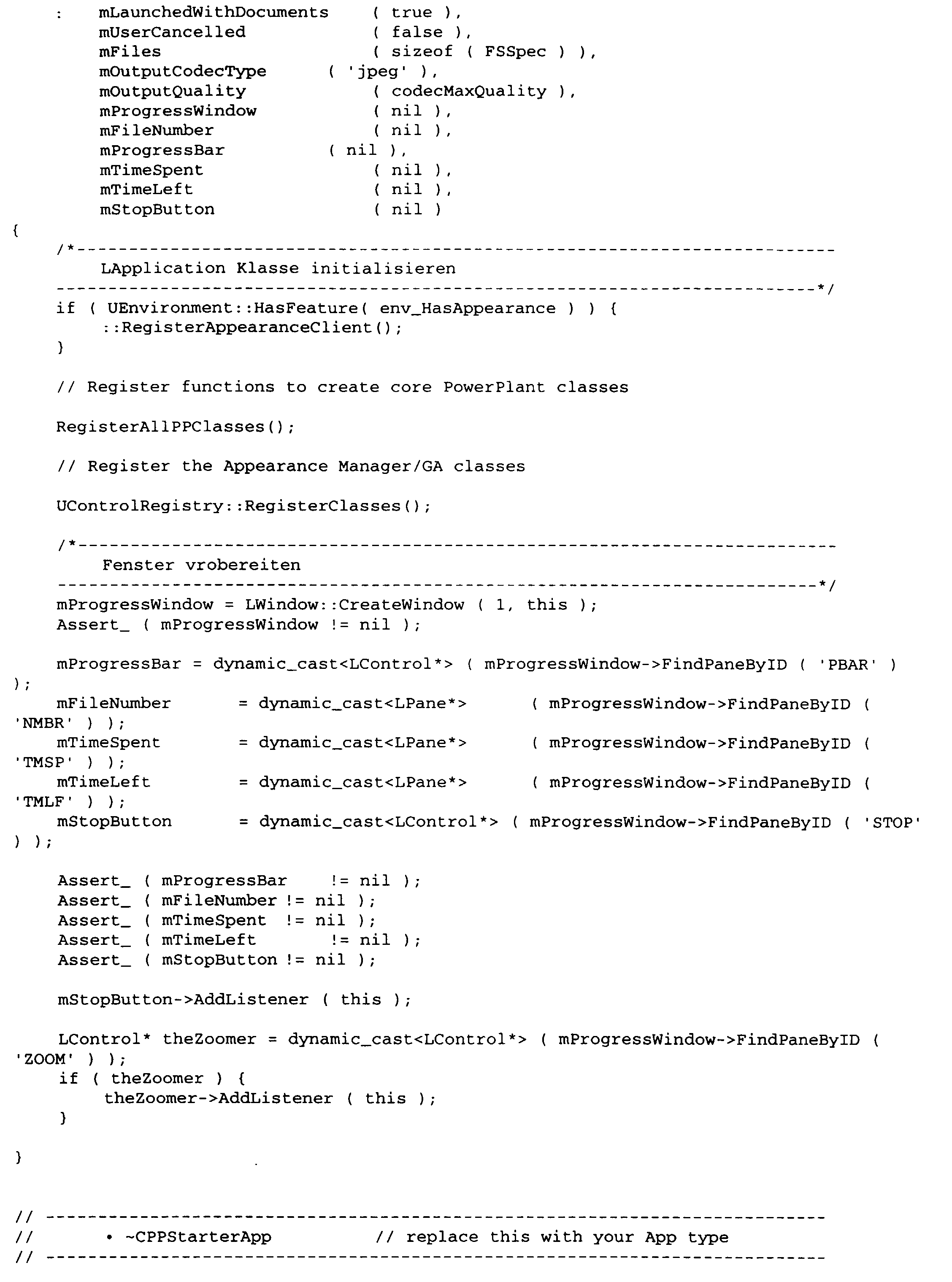

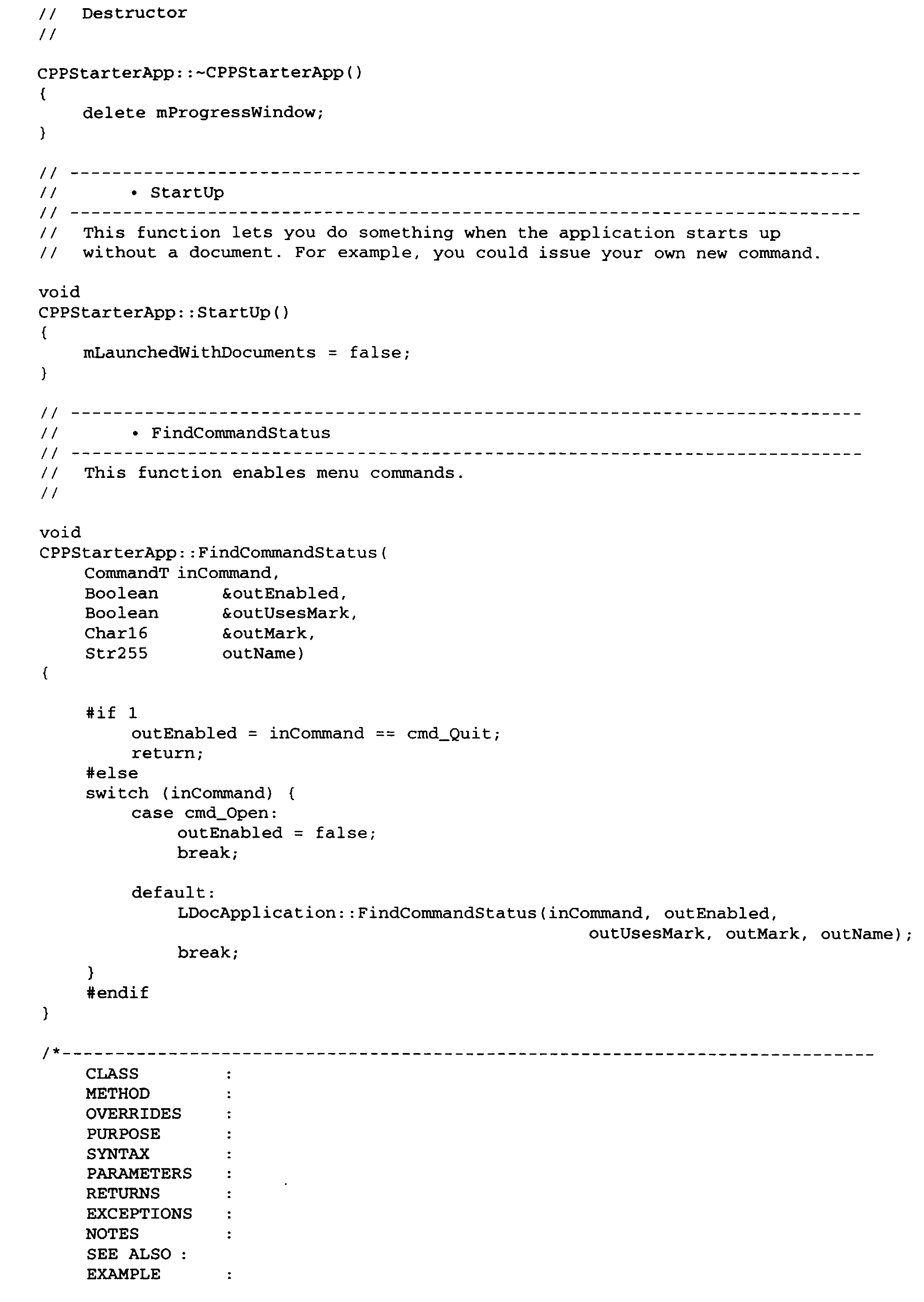

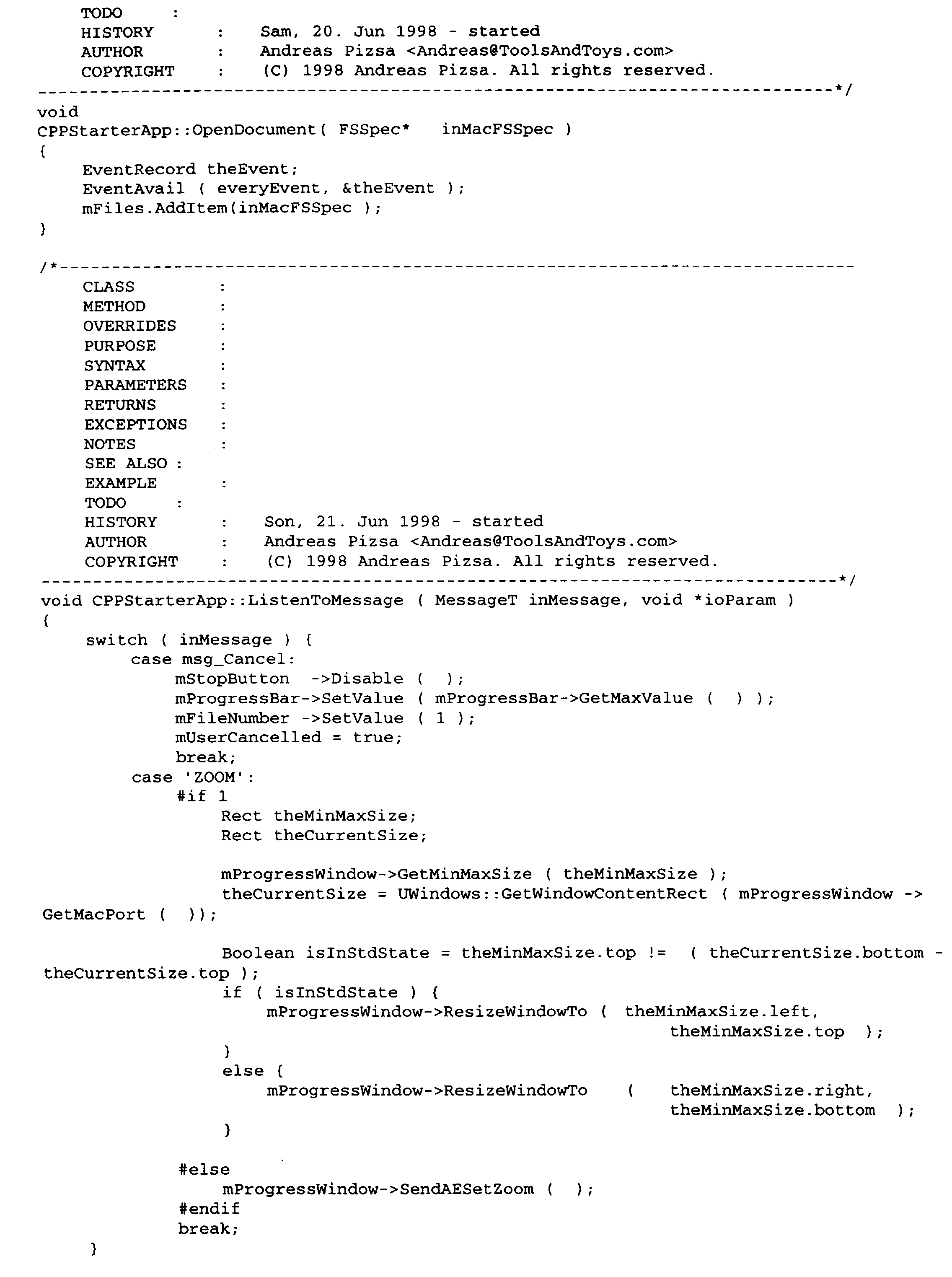

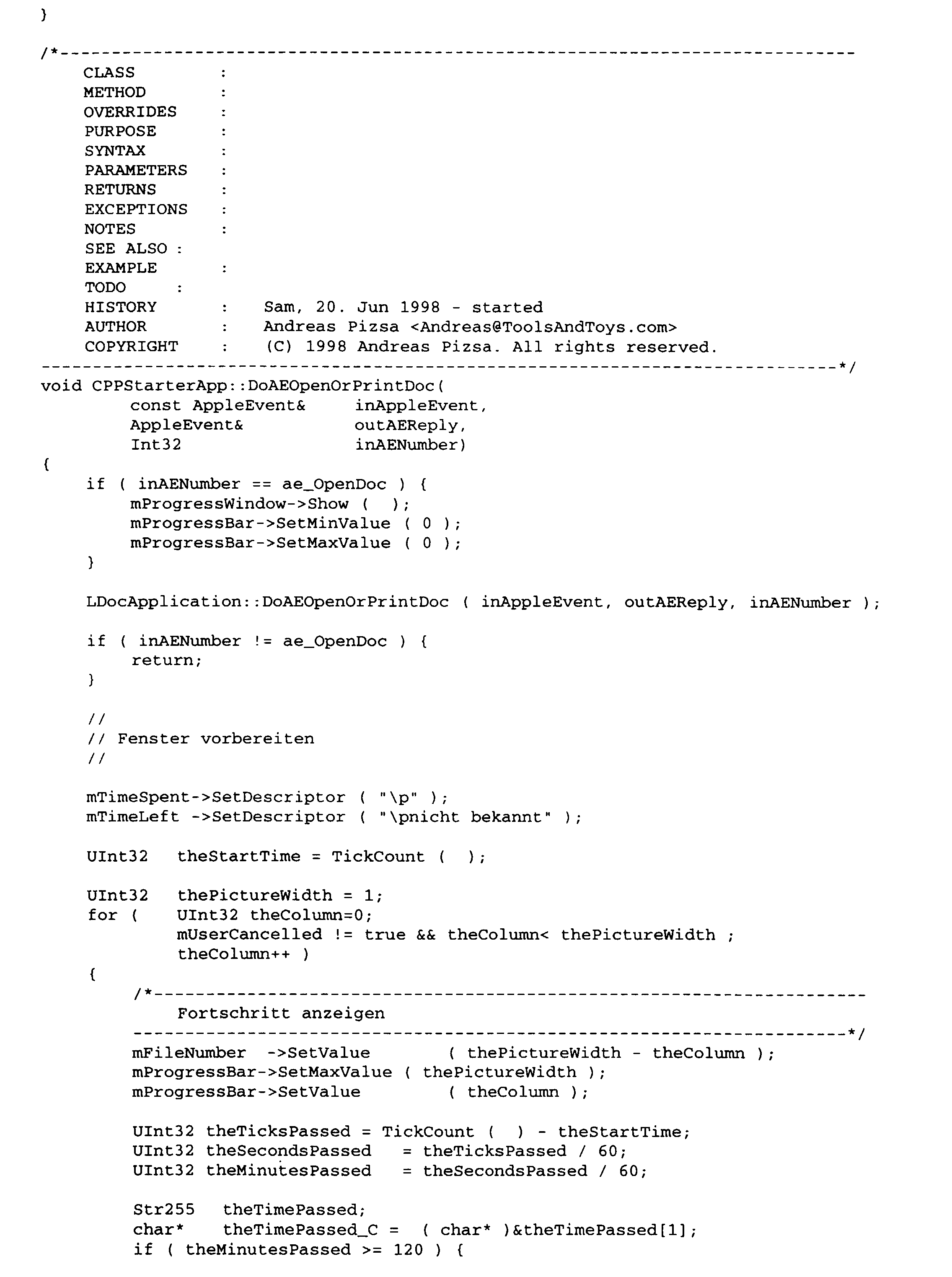

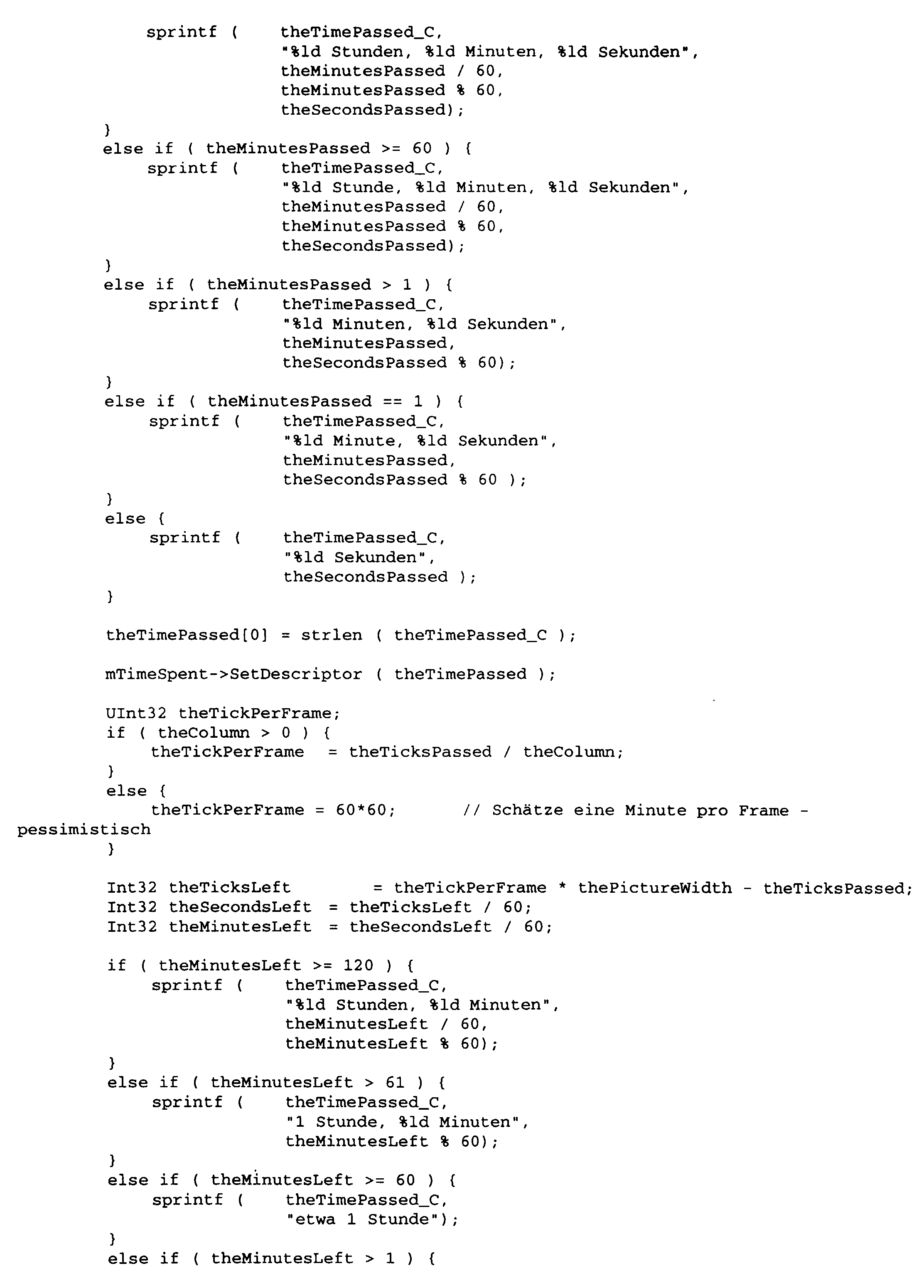

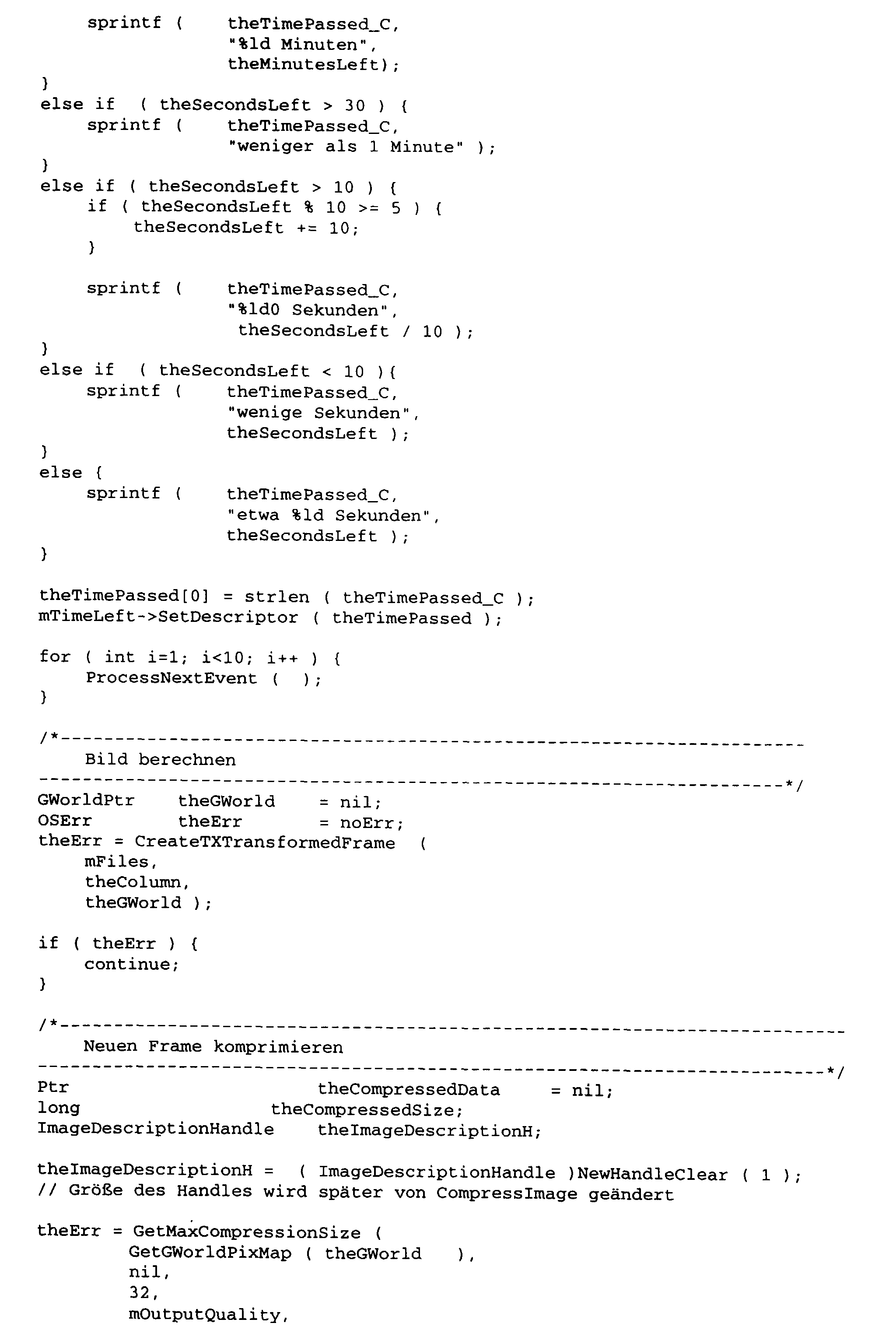

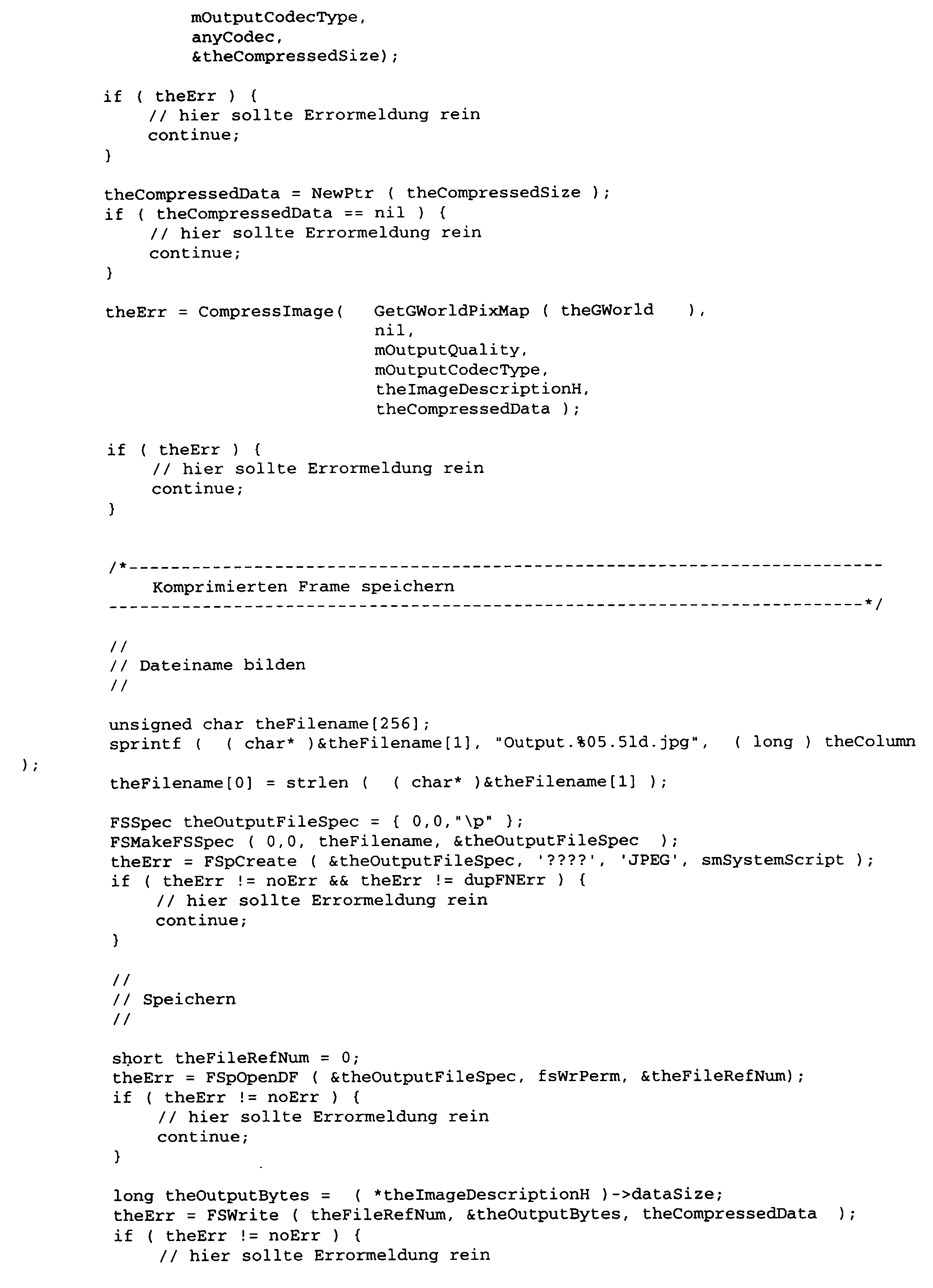

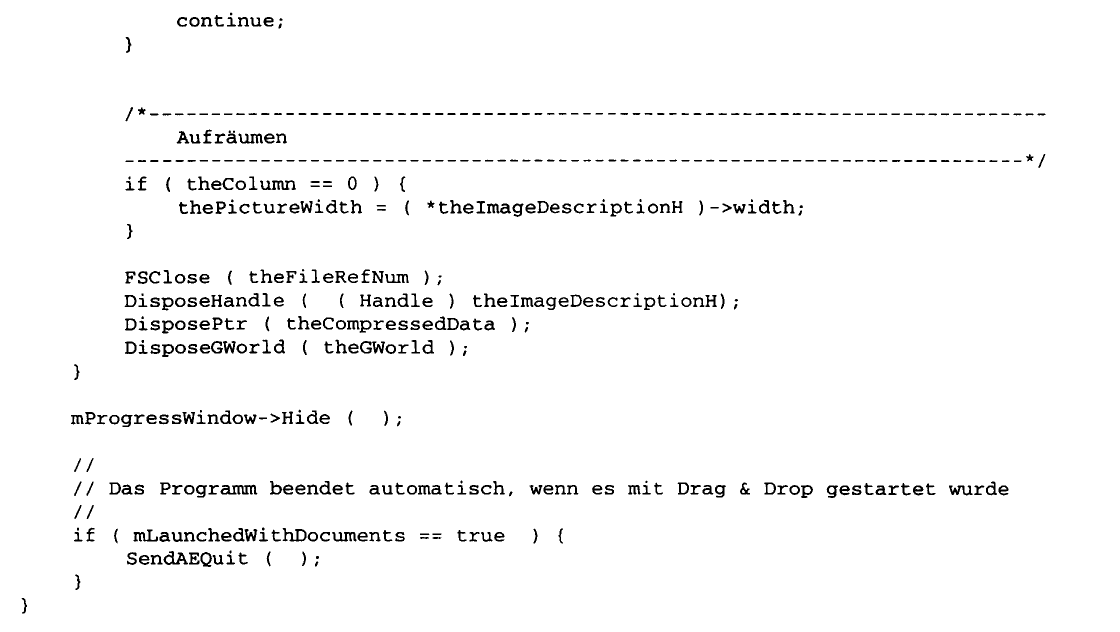

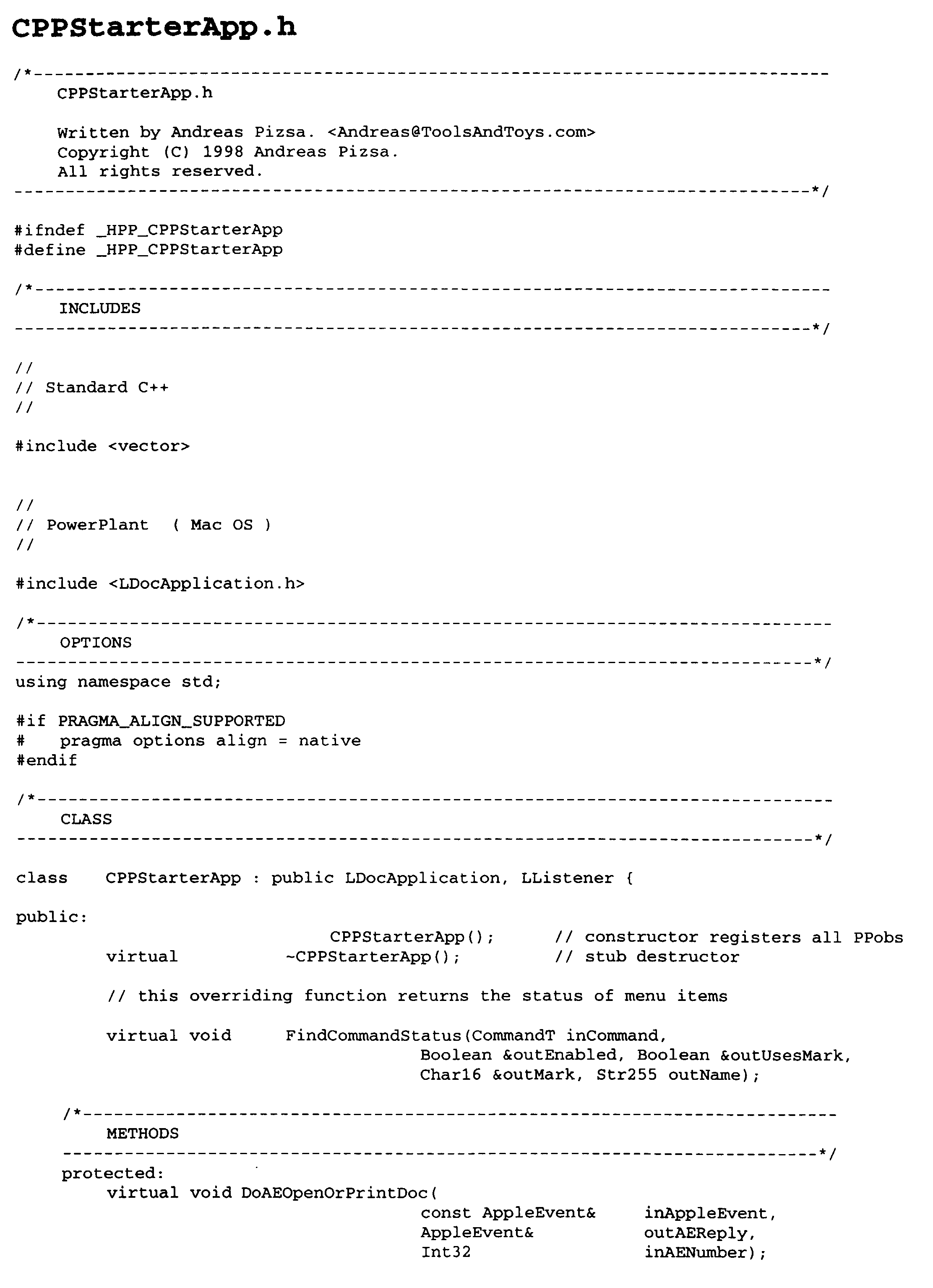

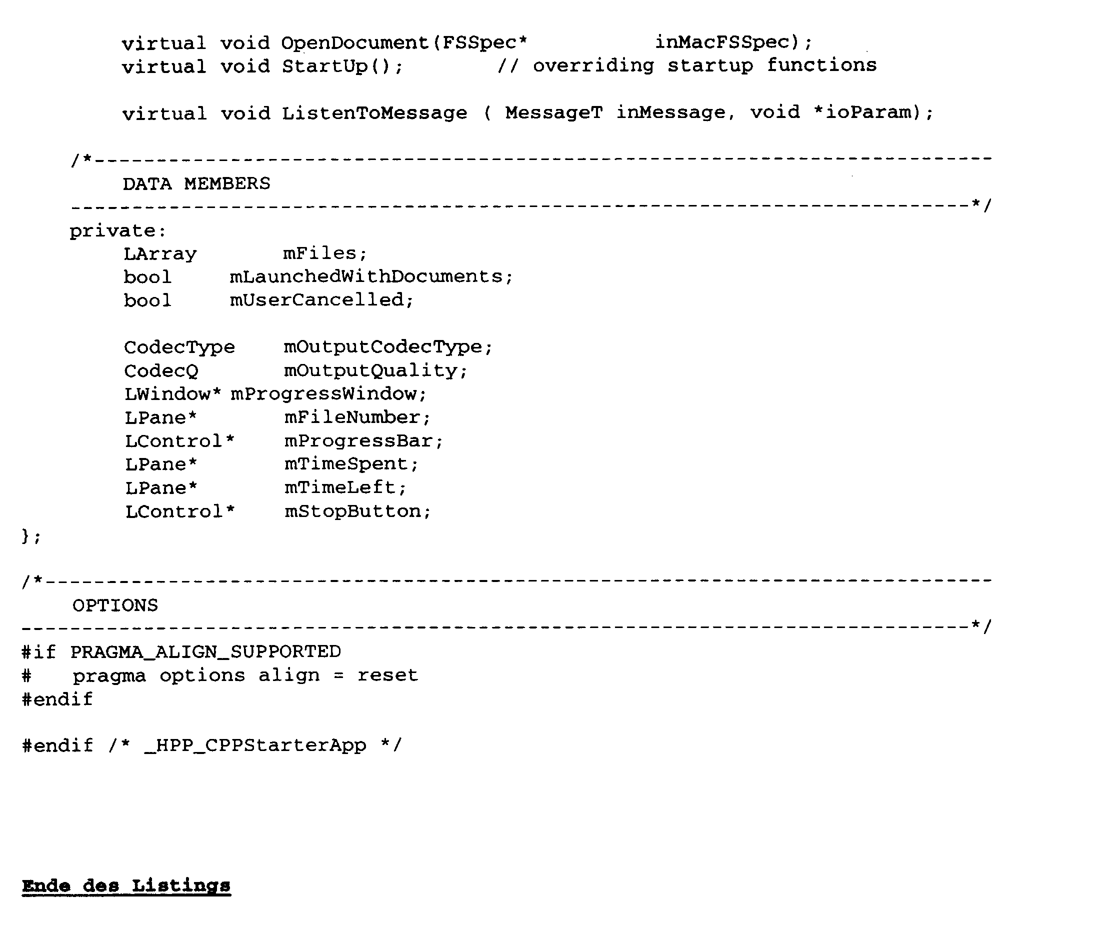

## Patentansprüche

1. Verfahren zur Transformation von aus einzelnen Originalkadern bestehenden Filmen, dadurch gekennzeichnet, daß ein aus einer Reihe von Originalkadern gebildeter Bildkörper nach einer Abfolge von Flächen geschnitten wird, die die transformierten Kader bildet.

2. Verfahren nach Anspruch 1, dadurch gekennzeichnet, daß die Flächen eben sind und parallel zur Zeitachse und vertikal verlaufen.
